# EUROPEAN PATENT SPECIFICATION

(11) **EP 2 223 668 B1**
(45) Date of publication and mention of the grant of the patent: **16.09.2015**
(21) Application number: 10164615.6
(22) Date of filing: 28.06.2005
(51) Int. Cl.: A61C 17/32, A61C 17/22, H02P 7/00

(54) **Power toothbrush with adjustable operation**
Elektrische Zahnbürste mit regelbarer Steuerung
Brosse à dents électrique à fonctionnement réglable

(30) Priority: 30.06.2004 US 584760 P
(43) Date of publication of application: 01.09.2010
(62) Divisional of application: 05755145.9
(73) Proprietor: Koninklijke Philips N.V., 5656 AE Eindhoven (NL)
(72) Inventor: Hall, Scott, E., 5600 AE, Eindhoven (NL); Bayeh, Daniel, 5600 AE, Eindhoven (NL); Lilley, Ronald, C., 5600 AE, Eindhoven (NL)
(74) Representative: Coops, Peter

(56) References cited:
- DE-A1- 2 848 749
- DE-U1-202005 003 516
- US-A- 5 000 684
- US-A1- 2003 115 694

## Description

The invention generally relates to power toothbrushes and more specifically concerns a system for adjusting the operation of the toothbrush by adjusting the amplitude of the brush motion.

The operational parameters of a power toothbrush, in particular, the frequency of the reciprocal motion of the brush portion of the toothbrush and the amplitude of the motion are typically established and set by the manufacturer prior to sale of the toothbrush. In those toothbrushes which are resonant systems, the operating frequency of the toothbrush is typically set at or near the resonant frequency of the toothbrush.

The amplitude of a power toothbrush established by the manufacturer may, however, not be optimal for a particular toothbrush and/or a particular user. A somewhat different amplitude then that established by the manufacturer may often be desirable to provide a maximum response and a preferred sense/feel by a particular user. Actual results from use of the toothbrush may also vary depending upon the particular amplitude of toothbrush motion. While amplitude may be adjusted by changing the power supplied to the motor, this approach has practical limitations, due to magnetic saturation in the motor and battery capacity.

It is noted that WO 2005/058188 relates to a toothbrush which is driven in a manner to produce a periodic change or variation in amplitude of a brush head portion (which includes the bristles and the bristle plate) of the toothbrush during operation thereof. In particular, the toothbrush known from WO 2005/058188 comprises a resonant drive system, wherein the drive system includes a circuit for changing the driving frequency relative to a center frequency to produce a periodic change of amplitude of the brush head portion. The center frequency as mentioned may be chosen such as to be offset from the resonant frequency, and the frequency deviation of the driving frequency may be in a predetermined range from the center frequency.

It is furthermore noted that DE 28 48 749 relates to a toothbrush in which the frequency of the motion of the brush head is adjusted by using a resistor. In particular, the motor for driving the brush head is coupled either directly to a battery, or through a resistor, wherein the resistor may be an existing component of the toothbrush. Changing the frequency involves changing the power supplied to the drive system. US 5 000 684 relates to a tooth cleaning apparatus in which adjustment of the amplitude and frequency of rotary motion for a cleaning tool which is part of the apparatus is based on regulating the pressure of a fluid medium as present in the apparatus and/or pulsing the fluid medium.

It is desirable to be able to change the amplitude of the brush after it leaves the manufacturer to optimize performance and/or the sense of cleansing, without directly adjusting the power.

Accordingly, the present invention is a manual system for changing the amplitude of motion of a brush portion of a power toothbrush, comprising: a drive system for a power toothbrush which operates at a selected frequency to move the toothbrush at a resulting amplitude; and a frequency adjustment system for changing the frequency of the drive system and hence the amplitude of motion of the brush portion, including a mechanical switch operable by a user, which is located on the handle of the toothbrush, and a microprocessor which in turn includes a counter responsive to the switch for changing the frequency output of a timer by a selected amount, wherein the frequency output controls the frequency of the drive system.
Figure 1 shows a power toothbrush with which the present invention can be used.
Figure 2 is a block diagram showing one embodiment of the tunable toothbrush of the present invention.

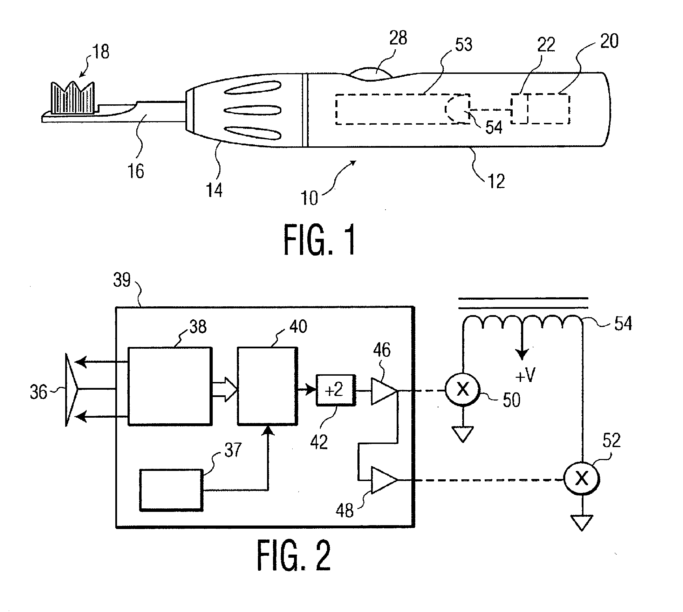

Figure 1 shows a power toothbrush 10. As an example, power toothbrush 10 includes a handle portion 12 and a head portion 14 attached to the handle portion. The handle portion includes a stator 53 which is part of the motor for the toothbrush and includes a drive coil 54. The motor is driven by a drive signal produced by a signal source 20, which includes switching circuit 22.

Head portion 14 typically includes a stem portion 16 and a brush portion 18 which is driven by operation of the motor. Operating an on/off switch 28 results in the brush portion 18 moving at a selected frequency and amplitude.

In the present invention, the operation of the toothbrush 10 is adjusted by changing the operating frequency of the toothbrush, which in the embodiments shown and described results in a change in amplitude of the brush motion, as described in more detail below. Figure 2 shows a manual embodiment of the frequency adjusting system. In the manual embodiment, the user operates a rocker switch 36 to change the operating frequency of the toothbrush through the action of a microprocessor 39. The action of rocker switch 36 is sensed by an up/down counter 38 to determine the amount of increase or decrease of the frequency of the signal to be provided by timer 40. The up/down counter 38 loads timer 40, to which is applied a clock signal 37 which provides the initial frequency of operation of the appliance. The output of timer 40 is sent to a divide-by-two circuit 42 which is used to produce a square wave, which is then applied to inverters 46 and 48. The output of inverters 46, 48 is applied to FETs 50 and 52 which control the application of current to stator coil 54 of motor 53. Other electrical switches, such as bipolar transistors, could be used in place of the FETs.

By operating rocker switch 36, a change of operating frequency of the toothbrush is produced which in turn affects the amplitude of the brush motion. The user operates the rocker switch until an optimal "feel" or other desired result, occurs. Each operation of the rocker switch will alter the frequency of operation by a selected amount. The frequency selected by the user may be higher or lower than the preset frequency and may be higher or lower than the actual resonant frequency of the toothbrush. In the embodiment shown, the user can operate the frequency adjustment system at his/her convenience, even during brushing, to adjust the amplitude to a preferred optimal value. Typically, as indicated above, this value will be different than the frequency set by the manufacturer.

It is possible, however, to limit the ability of the user to change the frequency, and hence the amplitude, to some extent, such as by providing a timer which must expire prior to the user being able to change the frequency again. The timer could be, for instance, set to limit the ability of the user to change the frequency to once or perhaps twice during a normal brushing event, which is typically two minutes.

Accordingly, a system has been described for adjusting the operation of a power toothbrush, by changing the frequency of the toothbrush.

Although a preferred embodiment of the invention has been disclosed for purposes of illustration, it should be understood that various changes, modifications and substitutions may be incorporated without departing from the scope of the invention, which is defined by the claims which follow.

## Claims

1. A manual system for changing the amplitude of motion of a brush portion (18) of a power toothbrush (10), comprising:
a drive system for a power toothbrush (10) which operates at a selected frequency to move the brush portion (18) at a resulting amplitude; and
a frequency adjustment system for changing the frequency of the drive system and hence the amplitude of motion of the brush portion (18), including a mechanical switch (36) operable by a user, which is located on the handle (12) of the toothbrush (10), **characterized by** a microprocessor (39) which in turn includes a counter (38) responsive to the switch (36) for changing the frequency output of a timer (40) by a selected amount, wherein the frequency output controls the frequency of the drive system.

2. The system of claim 1, wherein the frequency adjustment system is operable any time that the toothbrush (10) is on.

## Patentansprüche

1. Manuelles System zur Änderung der Amplitude der Bewegung eines Bürstenabschnitts (18) einer elektrischen Zahnbürste (10), umfassend:
ein Antriebssystem für eine elektrische Zahnbürste (10), das bei einer ausgewählten Frequenz arbeitet, um den Bürstenabschnitt (18) mit einer sich ergebenden Amplitude zu bewegen; und
ein Frequenzeinstellungssystem, um die Frequenz des Antriebssystems und somit die Amplitude der Bewegung der Bürstenabschnitts (18) zu ändern, darin eingeschlossen einen mechanischen Schalter (36), der von einem Benutzer betätigt werden kann, der sich auf dem Handgriff (12) der Zahnbürste (10) befindet, **gekennzeichnet durch** einen Mikroprozessor (39), der seinerseits einen Zähler (38) umfasst, die auf den Schalter (36) reagiert, um den Frequenzausgang eines Zeitgebers (40) um eine ausgewählte Größe zu ändern, wobei der Frequenzausgang die Frequenz des Antriebssystems steuert.

2. System nach Anspruch 1, wobei das Frequenzeinstellungssystem zu jeder Zeit, in der die Zahnbürste (10) eingeschaltet ist, betriebsbereit ist.

## Revendications

1. Système manuel de changement de l'amplitude de mouvement d'une partie de brosse (18) d'une brosse à dents électrique (10), comprenant :
un système d'entraînement pour une brosse à dent électrique (10) qui fonctionne à une fréquence sélectionnée pour déplacer la partie de brosse (18) à une amplitude résultante ; et
un système d'ajustement de fréquence pour le changement de fréquence du système d'entraînement et par conséquent l'amplitude de mouvement de la partie de brosse (18) incluant une commutation mécanique (36) actionnable par un utilisateur, qui est située sur le manche (12) de la brosse à dent (10),
**caractérisé par** un microprocesseur (39) qui comprend à son tour un compteur (38) sensible à la commutation (36) pour le changement de la sortie de fréquence d'une minuterie (40) d'une valeur sélectionnée, dans lequel la sortie de fréquence commande la fréquence du système d'entraînement.

2. Système selon la revendication 1, dans lequel le système d'ajustement de fréquence est actionnable chaque fois que la brosse à dent (10) est en marche.
